Europäisches Patentamt

European Patent Office

Office européen des brevets

(11) Veröffentlichungsnummer: **0 295 747**
**A2**

## (12) EUROPÄISCHE PATENTANMELDUNG

(21) Anmeldenummer: 88201188.5

(22) Anmeldetag: 09.06.88

(51) Int. Cl.⁴: **C01B 11/02**

(30) Priorität: 13.06.87 DE 3719878

(43) Veröffentlichungstag der Anmeldung:
**21.12.88 Patentblatt 88/51**

(84) Benannte Vertragsstaaten:
**AT DE FR SE**

(71) Anmelder: **METALLGESELLSCHAFT AG**
**Reuterweg 14 Postfach 3724**
**D-6000 Frankfurt/M.1(DE)**

(72) Erfinder: **Lohrberg, Karl**
**Breslauer Strasse 1**
**D-6056 Heusenstamm(DE)**

(54) **Reaktor zum Erzeugen von Chlordioxid aus Alkalichlorat und Säure.**

(57) Der Reaktor zum Umsetzen von Alkalichlorat mit Säure, insbesondere Salzsäure, zum Erzeugen eines gasförmigen Gemisches aus Chlordioxid und Chlor, weist mehrere gasdurchlässige Böden auf, welche Reaktionsetagen bilden, die durch Überlaufleitungen verbunden sind. Die Böden haben etwa die Form eines umgekehrten Trichters, sie weisen einen Gasleitkanal und eine den Gasleitkanal übergreifende Gasführungsglocke auf. Jede Reaktionsetage besitzt 2 bis 10 senkrechte, radial verlaufende, zwischen der Gasführungsglocke und der Reaktorinnenwand angeordnete Abteilwände. Benachbarte Abteilwände begrenzen eine Reaktionskammer, wobei jede Reaktionskammer einen Zulauf für Säure aufweist.

Fig.1

## Reaktor zum Erzeugen von Chlordioxid aus Alkalichlorat und Säure

Die Erfindung betrifft einen Reaktor zum Umsetzen von Alkalichlorat mit Säure, insbesondere Salzsäure, zum Erzeugen eines gasförmigen Gemisches aus Chlordioxid und Chlor, wobei der Reaktor mehrere gasundurchlässige Böden aufweist, welche Reaktionsetagen bilden, die durch Überlaufleitungen verbunden sind, wobei die Eintrittsöffnung jeder Überlaufleitung die Lage des Flüssigkeitsspiegels bestimmt.

Man erzeugt in bekannter Weise Chlordioxid, das als Bleichmittel gebraucht wird, z.B. durch Umsetzen von Natriumchlorat mit Salzsäure, wobei man zumeist noch Luft als Spül- und Verdünnungsgas zuführt. Die Bildung von $ClO_2$ kann durch die folgenden beiden Reaktionen erfolgen:

1. $NaClO_3 + 2HCl \rightarrow ClO_2 + 1/2\ Cl_2 + NaCl + H_2O$

2. $NaClO_3 + 6HCl \rightarrow 3Cl_2 + NaCl + 3H_2O$

Hierbei muß das Verhältnis von $NaClO_3$ zu HCl groß sein, um die erste Reaktion zu begünstigen. Ferner ist es vorteilhaft, in jeder Reaktionsetage möglichst hohe Konzentrationen von $NaClO_3$ und HCl vorliegen zu haben, um die Bildung von $ClO_2$ zu beschleunigen, weil die Geschwindigkeit, mit der $ClO_2$ gebildet wird, direkt proportional dem Produkt der Konzentrationen von HCl und $NaClO_3$ ist. Reaktionszeiten von einigen Stunden sind erforderlich, wenn die gesamte Säure und das gesamte Chlorat miteinander reagieren sollen.

Da Chlordioxid eine gasförmige Verbindung ist, die sich in zu hoher Konzentration explosionsartig zersetzt, muß deren Partialdruck niedrig gehalten werden. Dies geschieht üblicherweise durch Verdünnen des Reaktionsgemisches mit einem Inertgas, z.B. Luft. Mit diesem Verdünnungsgas wird das erzeugte $ClO_2$-$Cl_2$-Gasgemisch aus den Reaktionsetagen ausgeblasen.

Der Erfindung liegt die Aufgabe zugrunde, einen eingangs genannten Reaktor zu schaffen, bei welchem in jeder Reaktionsetage das optimale Verhältnis der Konzentrationen von Chlorat und Säure eingestellt werden kann.

Erfindungsgemäß geschieht dies dadurch, daß die Böden etwa die Form eines umgekehrten Trichters haben, daß jeder Boden einen Gasleitkanal und eine den Gasleitkanal übergreifende Gasführungsglocke aufweist, daß jede Reaktionsetage 2 bis 10 senkrechte, radial verlaufende, zwischen der Gasführungsglocke und der Reaktorinnenwand angeordnete Abteilwände aufweist, die höher als der Flüssigkeitsspiegel ausgebildet sind, daß benachbarte Abteilwände eine Reaktionskammer begrenzen, daß jede Reaktionskammer einen Zulauf für Säure aufweist, daß zu jeder Reaktionsetage eine Einspeisungs-Reaktionskammer mit einer von außen oder von der nächsthöheren Reaktionsetage kommenden Einspeisung für Alkalichlorat gehört, daß benachbart zur Einspeisungs-Reaktionskammer eine Ablauf-Reaktionskammer angeordnet ist, in welcher sich die Eintrittsöffnung der Überlaufleitung befindet, daß die Abteilwand zwischen der Einspeisungs-Reaktionskammer und der Ablauf-Reaktionskammer flüssigkeitsundurchlässig ausgebildet ist und daß die übrigen Abteilwände im unteren Bereich mindestens eine Durchlaßöffnung aufweisen.

Dadurch daß jeder Boden nur einen Gasleitkanal und eine Gasführungsglocke aufweist, wird ein technisch einfach herzustellender Aufbau erreicht. Die Glocke sorgt dafür, daß die von der darunterliegenden Reaktionsetage kommenden Gase etwa gleichmäßig in die Reaktionskammern verteilt werden und diese nach oben durchströmen.

Besonders wichtig ist, daß zu jeder Reaktionskammer ein Zulauf für Säure gehört, der von außen kommt, so daß man die Säure jeder Kammer dosiert zugeben kann.

Die Anzahl der Reaktionskammern pro Reaktionsetage ist in sinnvollen Grenzen frei wählbar; zumeist genügen 3 bis 8 Reaktionskammern, die man durch die gleiche Anzahl von Abteilwänden ausbildet.

Einzelheiten des Reaktors werden mit Hilfe der Zeichnung erläutert. Es zeigt:

Fig. 1 in schematischer Darstellung einen Längsschnitt durch den Reaktor,

Fig. 2 einen Schnitt nach der Linie II-II in Fig. 1,

Fig. 3 einen Schnitt nach der Linie III-III in Fig. 1 und

Fig. 4 eine Ansicht einer Reaktionsetage ohne Zu- und Ablaufleitungen, etwa in Richtung des Pfeils A in Fig. 1 gesehen.

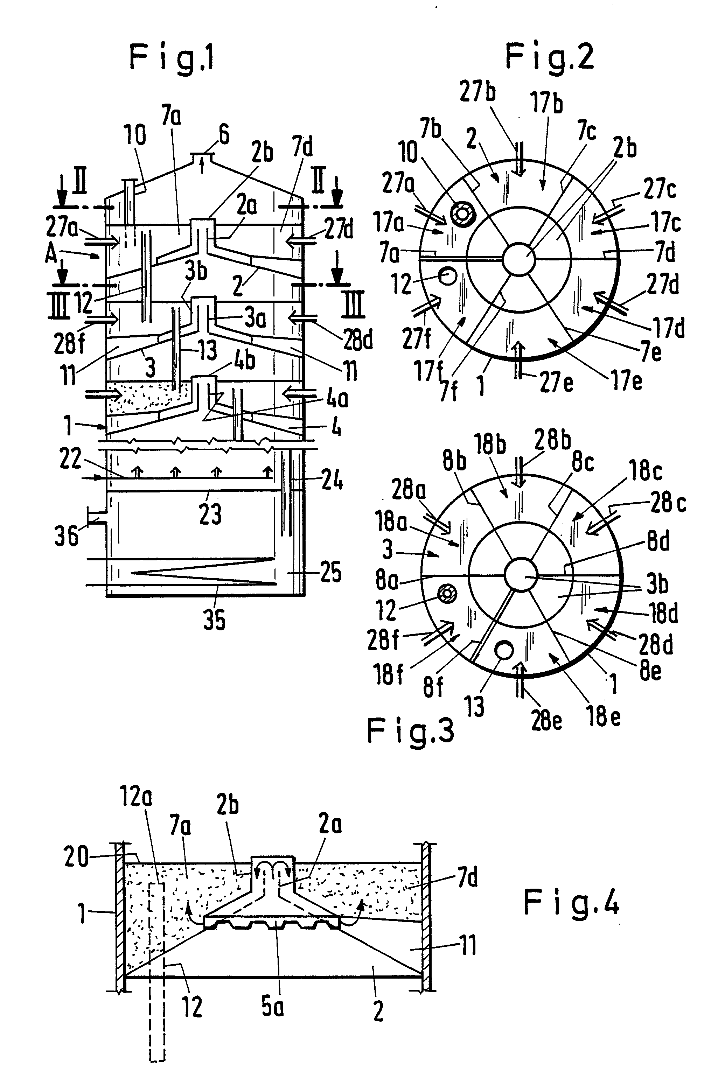

Der Reaktor weist ein etwa zylindrisches Gehäuse (1) auf, in welchem sich übereinander angeordnet zahlreiche Böden (2), (3) und (4) befinden. Die Böden haben etwa die Form eines umgekehrten Trichters, wobei jeder Boden in der Mitte in einen offenen Gasleitkanal (2a, 3a oder 4a) übergeht. In Fig. 4 ist der oberste Boden (2) in Ansicht zu sehen. Über jedem Gasleitkanal (2a, 3a oder 4a) befindet sich eine Gasleitglocke (2b, 3b oder 4b), an deren Unterseite das aus dem Gasleitkanal kommende Gasgemisch entlangströmt und die Glocke dann durch den mit Öffnungen versehenen Rand (5a), vgl. Fig. 4, verläßt. Dieser Rand ist etwa zackenartig ausgebildet.

Jeder Boden stellt die untere Begrenzung einer Reaktionsetage dar und zu jeder Reaktionsetage gehört ein Zulauf für Chlorat und mehrere Zuleitungen für die Säure, üblicherweise HCl. Die Draufsicht auf den obersten Boden (2) in Fig. 2 sowie auf den nächsten Boden (3) in Fig. 3 zeigt die Anordnung von senkrechten, zwischen der Gasführungsglocke (2b bzw. 3b) und dem Gehäuse (1) radial verlaufenden senkrechten Abteilwänden (7a bis 7f) in Fig. 2 und (8a bis 8f) in Fig. 3. Durch benachbarte Abteilwände werden Reaktionskammern (17a bis 17f), vgl. Fig. 2, und (18a bis 18f), vgl. Fig. 3, gebildet. Die Reaktionskammern sind nach oben offen. Zu jeder Reaktionskammer gehört eine Zufuhrleitung (27a bis 27f) für Salzsäure, vgl. Fig. 2, und (28a bis 28f), vgl. Fig.3, von denen einige auch in Fig. 1 angedeutet sind. In Fig. 4 sind Zufuhr- und Ableitungen der besseren Übersichtlichkeit wegen weggelassen.

Das flüssige Alkalichlorat wird von außen durch die Leitung (10) in den Reaktor eingespeist und gelangt zunächst in die Reaktionskammer (17a) der obersten Reaktionsetage, vgl. Fig. 1 und 2. Die Abteilwand (7a) ist flüssigkeitsundurchlässig ausgebildet, die Abteilwand (7b) bildet am unteren Ende jedoch zwischen sich und dem Boden (2) durch verkürzte Ausbildung eine breite Durchlaßöffnung (11). Die genau gleiche Ausbildung weist die Abteilwand (7d) auf, die in Fig. 4 mit ihrer Durchlaßöffnung (11) vergrößert dargestellt ist. Da alle Abteilwände (7b bis 7f) mit Ausnahme der Abteilwand (7a) die gleichen Durchlaßöffnungen (11) aufweisen, kann das Réaktionsgemisch aus Chlorat und Säure auf der obersten Reaktionsetage nacheinander die Reaktionskammern (17a bis 17f) durchfließen. Dabei ist es wichtig, daß die jeweilige Durchlaßöffnung (11) im untersten Bereich der Reaktionskammer angeordnet ist, weil das unreagierte Flüssigkeitsgemisch spezifisch schwerer ist als das ausreagierte.

In der Reaktionskammer (17f) befindet sich die Überlaufleitung (12), durch welche das Flüssigkeitsgemisch zur nächstunteren Reaktionsetage fließt, vgl. Fig. 1 und 2. Damit sich zulaufende und ablaufende Flüssigkeit nicht vermischen können, ist die Abteilwand (7a) flüssigkeitsdicht ausgebildet, d.h. die Abteilwand (7a) weist die Durchlaßöffnung (11) nicht auf, wie das auch in Fig. 4 verdeutlicht ist. Zur optischen Hervorhebung wurden die beiden Abteilwände (7a) und (7d) in Fig. 4 punktiert, auch in Fig. 1 wurde eine der Abteilwände durch Punktieren hervorgehoben, Die flüssigkeitsdichten Abteilwände (7a) und (8f) wurden in den Fig. 2 und 3 zur Hervorhebung verstärkt gezeichnet.

Der Auslauf der Überlaufleitung (12) mündet in der zweiten Reaktionsetage in der Reaktionskammer (28f), vgl. Fig. 1 und 3. In dieser Etage weisen die Abteilwände (8a bis 8e) Durchlaßöffnungen (11) auf, so daß das Flüssigkeitsgemisch nacheinander die Reaktionskammern (18f,18a,18b,18c,18d,18e) durchfließt und dann die Überlaufleitung (13) erreicht, durch die die Flüssigkeit in die nächstniedrigere Reaktionsetage abfließt. Analog wie in Fig. 2 ist auch in der in Fig. 3 zu sehenden Anordnung die Abteilwand (8f), die sich zwischen den Reaktionskammern mit den beiden Überläufen (12,13) befindet, flüssigkeitsundurchlässig. In analoger Weise sind jeweils tieferliegende Reaktionsetagen mit einer flüssigkeitsundurchlässigen Abteilwand zwischen den Überläufen und den im übrigen flüssigkeitsdurchlässigen Abteilwänden ausgestattet. Die Anordnung der jeweiligen Überlaufleitungen ist am deutlichsten den Fig. 2 und 3 zu entnehmen, in Fig. 1 ist deren Anordnung, bezogen auf die zugehörigen Abteilwände, nur angedeutet und nicht konsequent richtig dargestellt. Insbesondere aus Fig. 4 geht hervor, daß die Eintrittsöffnungen (12a) der Überlaufleitungen niedriger liegen als die Oberkanten (20) der benachbarten Abteilwände. Dadurch ist gesichert, daß auf jeder Reaktionsetage die Flüssigkeit nicht über die Abteilwände hinwegfließen kann.

In Fig. 1 ist der untere Bereich des Reaktors, der sich vom eigentlichen Reaktionsbereich unterscheidet, schematisch dargestellt. Er weist eine Verteilerleitung (22) für die Zufuhr von Spül- und Verdünnungsluft auf, die zusammen mit dem ClO2-Cl2-Gasgemisch nach oben strömt und den Reaktor durch den Gasauslaß (6) verläßt. Unter dem Verteiler (22) ist ein weiterer Boden (23) angeordnet, in welchem sich eine Überlaufleitung (24) befindet. Das ausreagierte Flüssigkeitsgemisch sammelt sich im Reaktorsumpf (25), der eine Beheizung (35), z.B. eine Dampfschlange, aufweist, damit die restliche Salzsäure beschleunigt ausreagieren kann.

Durch die Abzugsleitung (36) wird die Flüssigkeit aus dem Sumpf (25) abgeführt.

Der Reaktor weist zumeist 2 bis 8 Reaktionsetagen auf und jede Reaktionsetage ist durch Abteilwände in 2 bis 10 und vorzugsweise 3 bis 8 Reaktionskammern unterteilt.

## Ansprüche

1. Reaktor zum Umsetzen von Alkalichlorat mit Säure, insbesondere Salzsäure, zum Erzeugen eines gasförmigen Gemisches aus Chlordioxid und Chlor, wobei der Reaktor mehrere gasdurchlässige Böden aufweist, welche Reaktionsetagen bilden, die durch Überlaufleitungen verbunden sind, wobei die Eintrittsöffnung jeder Überlaufleitung die Lage des Flüssigkeitsspiegels bestimmt, dadurch gekennzeichnet, daß die Böden etwa die Form eines umgekehrten Trichters haben, daß jeder Boden einen Gasleitkanal und eine den Gasleitkanal übergreifende Gasführungsglocke aufweist, daß jede Reaktionsetage 2 bis 10 senkrechte, radial verlaufende, zwischen der Gasführungsglocke und der Reaktorinnenwand angeordnete Abteilwände aufweist, die höher als der Flüssigkeitsspiegel ausgebildet sind, daß benachbarte Abteilwände eine Reaktionskammer begrenzen, daß jede Reaktionskammer einen Zulauf für Säure aufweist, daß zu jeder Reaktionsetage eine Einspeisungs-Reaktionskammer mit einer von außen oder von der nächsthöheren Reaktionsetage kommenden Einspeisung für Alkalichlorat gehört, daß benachbart zur Einspeisungs-Reaktionskammer eine Ablauf-Reaktionskammer angeordnet ist, in welcher sich die Eintrittsöffnung der Überlaufleitung befindet, daß die Abteilwand zwischen der Einspeisungs-Reaktionskammer und der Ablauf-Reaktionskammer flüssigkeitsundurchlässig ausgebildet ist und daß die übrigen Abteilwände im unteren Bereich mindestens eine Durchlaßöffnung aufweisen.

2. Reaktor nach Anspruch 1, dadurch gekennzeichnet, daß jede Reaktionsetage 3 bis 8 Abteilwände aufweist.

Fig.1

Fig.2

Fig.3

Fig.4